(19) Europäisches Patentamt
European Patent Office
Office européen des brevets

(11) **EP 2 236 979 A2**

(12) **EUROPÄISCHE PATENTANMELDUNG**

(43) Veröffentlichungstag:
**06.10.2010 Patentblatt 2010/40**

(51) Int Cl.:
***G01B 11/25*** *(2006.01)* ***G01N 21/88*** *(2006.01)*

(21) Anmeldenummer: **10003123.6**

(22) Anmeldetag: **24.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **03.04.2009 DE 102009017465**

(71) Anmelder: **Carl Zeiss OIM GmbH
73117 Wangen (DE)**

(72) Erfinder: **Knupfer, Klaus-Georg
73457 Essingen (DE)**

(74) Vertreter: **Carl Zeiss AG - Patentabteilung
Carl-Zeiss-Strasse 22
73447 Oberkochen (DE)**

(54) **Verfahren und Vorrichtung zum optischen Inspizieren einer zumindest teilweise reflektierenden Oberfläche an einem Gegenstand**

(57) Zum optischen Inspizieren einer zumindest teilweise reflektierenden Oberfläche (52) an einem Gegenstand (50) wird ein Muster (28) mit einer Vielzahl von helleren und dunkleren Bereichen (30, 32) bereitgestellt. Die helleren und dunkleren Bereiche bilden mindestens einen ersten räumlichen Intensitätsverlauf (34, 36) mit einer ersten räumlichen Periode. Der Gegenstand mit der Oberfläche wird relativ zu dem Muster um eine definierte Schiebedistanz verschoben, wobei der erste Intensitätsverlauf auf die Oberfläche fällt. Dabei nimmt die Oberfläche entlang der Schiebedistanz eine Vielzahl von unterschiedlichen Positionen relativ zu dem ersten Intensitätsverlauf ein. Es wird eine Vielzahl von Bildern über zumindest einen Bildsensor (40) aufgenommen, der eine Lichtstärke erfasst wobei die Bilder die Oberfläche mit dem ersten Intensitätsverlauf an den unterschiedlichen Positionen zeigen. In Abhängigkeit von den Bildern werden Eigenschaften der Oberfläche bestimmt. Gemäß einem Aspekt der Erfindung wird die Lichtstärke des ersten Intensitätsverlaufs (34, 36) beim Aufnehmen von mindestens einem der Bilder mit einer definierten Charakteristik (82) variiert. (Fig. 1)

Fig. 1

**Beschreibung**

Die vorliegende Erfindung betrifft ein Verfahren zum optischen Inspizieren einer zumindest teilweise reflektierenden Oberfläche an einem Gegenstand, mit den Schritten:

- Bereitstellen eines Musters mit einer Vielzahl von helleren und dunkleren Bereichen, die mindestens einen ersten räumlichen Intensitätsverlauf mit einer ersten räumlichen Periode bilden,

- Positionieren des Gegenstandes mit der Oberfläche relativ zu dem Muster derart, dass der erste Intensitätsverlauf auf die Oberfläche fällt,

- Verschieben des ersten Intensitätsverlaufs relativ zu der Oberfläche um eine definierte Schiebedistanz, wobei die Oberfläche entlang der Schiebedistanz eine Vielzahl von unterschiedlichen Positionen relativ zu dem ersten Intensitätsverlauf einnimmt,

- Aufnehmen einer Vielzahl von Bildern mit zumindest einem Bildsensor, der eine Lichtstärke erfasst, wobei die Bilder die Oberfläche mit dem ersten Intensitätsverlauf an den unterschiedlichen Positionen zeigen und

- Bestimmen von Eigenschaften der Oberfläche in Abhängigkeit von den Bildern.

Die Erfindung betrifft ferner eine Vorrichtung zum optischen Inspizieren einer zumindest teilweise reflektierenden Oberfläche an einem Gegenstand, mit einem Muster mit einer Vielzahl von helleren und dunkleren Bereichen, die einen ersten räumlichen Intensitätsverlauf mit einer ersten räumlichen Periode bilden, mit einer Aufnahme zum Positionieren des Gegenstandes mit der Oberfläche relativ zu dem Muster derart, dass der erste Intensitätsverlauf auf die Oberfläche fällt, mit einer Steuereinheit zum Verschieben des ersten Intensitätsverlaufs relativ zu der Oberfläche um eine definierte Schiebedistanz, wobei die Oberfläche entlang der Schiebedistanz eine Vielzahl von unterschiedlichen Positionen relativ zu dem ersten Intensitätsverlauf einnimmt, mit zumindest einer Bildaufnahmeeinheit mit mindestens einem Bildsensor, der eine Lichtstärke erfasst, zum Aufnehmen einer Vielzahl von Bildern, wobei die Bilder die Oberfläche mit dem ersten Intensitätsverlauf an den unterschiedlichen Positionen zeigen, und mit einer Auswerteeinheit zum Bestimmen von Eigenschaften der Oberfläche in Abhängigkeit von den Bildern.

Ein solches Verfahren und eine solche Vorrichtung sind beispielsweise aus der WO 2009/007130 A1 bekannt.

Bei der industriellen Fertigung von Produkten spielt die Produktqualität eine immer wichtigere Rolle. Hohe Qualität kann einerseits durch entsprechend ausgelegte, stabile Fertigungsprozesse erreicht werden. Andererseits müssen die Qualitätsparameter eines Produktes möglichst genau, zuverlässig und vollständig kontrolliert werden, um Qualitätsmängel frühzeitig zu erkennen. In vielen Fällen spielt die Qualität einer Oberfläche eine wichtige Rolle für die Produkteigenschaften. Dabei kann es sich um dekorative Oberflächen handeln, wie etwa Lackoberflächen bei Kraftfahrzeugen, oder um technische Oberflächen, wie beispielsweise die Oberfläche von fein bearbeiteten metallischen Kolben oder Lagern.

Es gibt eine Vielzahl von Vorschlägen und Konzepten, um solche Oberflächen automatisiert zu prüfen. Die Deflektometrie ist für zumindest teilweise reflektierende Oberflächen ein sehr erfolgversprechendes Konzept, bei welchem ein Muster mit helleren und dunkleren Bereichen über die zu inspizierende Oberfläche betrachtet wird. Das Muster wird relativ zu der Oberfläche verschoben. Aufgrund der Veränderungen, welche die betrachteten Bereiche durch die Reflektion erfahren, ist es möglich, die reflektierende Oberfläche optisch zu inspizieren. Beispielsweise kann die lokale Neigung eines Oberflächenpunktes aus zumindest drei Bildern mit verschiedenen Relativpositionen des Musters bestimmt werden. Anhand der lokalen Neigungen können anschließend Kratzer, Poren, Beulen, Lunker und andere dimensionelle Defekte erkannt werden. Auch Glanzgrad und Streueigenschaften der Oberfläche können mit Hilfe der Deflektometrie bestimmt werden.

Die eingangs genannte WO 2009/007130 A1 beschreibt eine Vorrichtung und ein Verfahren der eingangs genannten Art, wobei die Oberfläche mit Hilfe der Deflektometrie inspiziert wird. Sämtliche Details zu der deflektometrischen Auswertung, die in WO 2009/007130 A1 offenbart sind, sollen hier durch Bezugnahme aufgenommen sein. Die bekannte Vorrichtung weist einen Tunnel auf, dessen Innenwand mit einem Streifenmuster versehen ist, das einen sinusförmigen Intensitätsverlauf bildet. Ein Gegenstand mit der zu inspizierenden Oberfläche, in diesem Fall ein Kraftfahrzeug, wird durch den Tunnel hindurchbewegt. Währenddessen wird die zu inspizierende Oberfläche von mehreren Kameras erfasst. Aufgrund der Relativbewegungen der Oberfläche zu dem Muster wandert der Intensitätsverlauf aus Sicht der Kameras über die Oberfläche. Für die praktische Realisierung des Verfahrens ist es von Vorteil, wenn jeder zu inspizierende Oberflächenpunkt an zumindest vier verschiedenen Positionen relativ zu dem Muster aufgenommen wird, wobei die zumindest vier verschiedenen Positionen genau eine Periode des Intensitätsverlaufs abdecken.

Die Genauigkeit der Inspektion ist abhängig von der Genauigkeit des Intensitätsverlaufs. Weicht der tatsächliche Intensitätsverlauf des Musters von dem idealen Intensitätsverlauf ab, der bei der Auswertung der Bilder zugrunde gelegt wird, ergeben sich Ungenauigkeiten beim Bestimmen der Eigenschaften der Oberfläche. Eine besonders einfache Inspektion ermöglicht ein ideal sinusförmiger Intensitätsverlauf. Die Bereitstellung eines möglichst ideal sinusförmigen Intensitätsverlaufs ist allerdings sehr aufwändig und damit kostenintensiv. Gleiches gilt für andere Intensitätsverläufe, die sich zumindest bereichsweise kontinuierlich in ihrer Intensität verändern.

Vor diesem Hintergrund ist es eine Aufgabe der vorliegenden Erfindung, ein alternatives Verfahren und eine alternative Vorrichtung anzugeben, um die Genauigkeit der Muster beim Inspizieren auf wirtschaftliche Weise zu verbessern. Dabei sollen das Verfahren und die Vorrichtung möglichst universell einsetzbar sein.

Diese Aufgabe wird nach einem Aspekt der Erfindung durch ein Verfahren der eingangs genannten Art gelöst, wobei die Lichtstärke des ersten Intensitätsverlaufs beim Aufnehmen von mindestens einem der Bilder mit einer definierten Charakteristik variiert wird.

Nach einem weiteren Aspekt der Erfindung wird diese Aufgabe durch eine Vorrichtung der eingangs genannten Art gelöst, mit einer Stelleinrichtung, die die Lichtstärke des ersten Intensitätsverlaufs beim Aufnehmen von mindestens einem der Bilder mit einer definierten Charakteristik variiert.

Das neue Verfahren und die neue Vorrichtung variieren die Lichtstärke des ersten Intensitätsverlaufs beim Aufnehmen der für die Auswertung herangezogenen Bilder, d.h. während der Bildsensor der Bildaufnahmeeinheit belichtet wird (also während der Belichtungszeit). Mit anderen Worten wird der Lichtfluss, der den Bildsensor erreicht, durch Variieren der Lichtstärke beim Aufnehmen des Bildes moduliert. In einem Ausführungsbeispiel, das weiter unten im Detail beschrieben ist, wird beispielsweise die Grundhelligkeit im Bereich des Musters während der Belichtungszeit variiert. Dies wirkt sich auf die Abbildung des Intensitätsverlaufs innerhalb des entsprechenden Bildes aus. Das Variieren der Lichtstärke bei der Bildaufnahme bewirkt eine Filterung, deren Parameter von der definierten Charakteristik abhängen. Diese Charakteristik beschreibt die Art und Weise, wie die Lichtstärke bei der Bildaufnahme über der Zeit verändert wird. Die Filterung wirkt sich besonders auf diejenigen Bereiche des Bildes aus, deren Bildinhalt sich während der Bildaufnahme, also während der Belichtungszeit, verändert. Die Charakteristik bewirkt, dass Veränderungen in den entsprechenden Bereichen - über die Belichtungszeit gesehen - nicht gleichberechtigt in das aufgenommene Bild eingehen, sondern innerhalb der Belichtungszeit gewichtet werden. Die Filterung bzw. Modulation verändert das "Aussehen" des Intensitätsverlaufs auf der Oberfläche aus Sicht der Bildaufnahmeeinheit, und sie ermöglicht daher auf intelligente und gewissermaßen virtuelle Weise, die Qualität des Intensitätsverlaufs zu optimieren. Wie nachfolgend aufgezeigt wird, ist es durch geeignete Variation der Lichtstärke möglich, einen nahezu ideal sinusförmigen Intensitätsverlauf aus einem Muster mit nur mäßig oder gar nicht sinusförmigem Intensitätsverlauf zu erzeugen, indem die Charakteristik so gewählt wird, dass sich eine Tiefpassfilterung ergibt. In einem Ausführungsbeispiel kann ein nahezu idealer Sinusverlauf aus einem Muster erzeugt werden, das schwarze und weiße Blockstreifen besitzt, d.h. aus einem Muster mit einem rechteckförmigen Intensitätsverlauf.

Vorteil des neuen Verfahrens und der neuen Vorrichtung ist es, dass ein einfaches, leicht herzustellendes Muster mit geringen Anforderungen an die Qualität und Formtreue des gewünschten Intensitätsverlaufs eingesetzt werden kann, indem der "sichtbare" Intensitätsverlauf innerhalb des aufgenommenen Bildes durch Variieren der Lichtstärke verbessert wird. Der verbesserte Intensitätsverlauf ermöglicht eine höhere Messgenauigkeit beim Inspizieren der Oberfläche, weil die Bildauswertung auf einem idealisierten mathematischen Modell des verwendeten Intensitätsverlaufs beruht. Jede Abweichung von dem idealisierten mathematischen Modell führt zu Messungenauigkeiten. Da das Variieren der Lichtstärke auf wirtschaftliche und relativ einfache Weise sehr präzise durchgeführt werden kann, ergibt sich durch Anwendung des neuen Verfahrens und der neuen Vorrichtung ein wirtschaftlicher und messtechnischer Vorteil gegenüber der aufwendigen Herstellung von möglichst idealen Mustern.

Die oben genannte Aufgabe ist daher vollständig gelöst.

In einer bevorzugten Ausgestaltung der Erfindung wird die Lichtstärke mit einer weitgehend trapezförmigen Charakteristik variiert.

In dieser Ausgestaltung verläuft die Charakteristik und damit die Veränderung der Lichtstärke zumindest weitgehend trapezförmig. Das bedeutet, dass die Lichtstärke zu Beginn der Belichtungszeit weitgehend linear ansteigt und dann für einen gewissen Anteil der Belichtungszeit weitgehend konstant bei einem Maximalwert bleibt. Vor Ende der Belichtungszeit sinkt die Charakteristik wiederum in weitgehend linearer Weise von dem Maximalwert auf den Anfangswert ab. Als Anfangswert kann ein Wert vorgesehen sein, der die auf den Bildsensor auftreffende Lichtstärke auf null reduziert. Der Maximalwert wird bevorzugt auf einen Wert festgelegt, der eine maximal vorhandene Lichtstärke ausnutzt bzw. nicht unnötig reduziert. Die trapezförmige Charakteristik führt zu einer Art Lichtrampe mit ansteigender und abfallender Flanke auf dem Bildsensor. Es hat sich gezeigt, dass mit einer solchen Charakteristik auf sehr einfache Weise eine effiziente Tiefpassfilterung erreicht werden kann, die es ermöglicht, aus einem "schlechten" Sinusverlauf einen "guten" Sinusverlauf zu erzeugen. Die trapezförmige Ausgestaltung ist eine Möglichkeit. Weiter sind auch beispielsweise eine kuppenartige oder gaussglockenartige Lichtrampe denkbar. Relevant hierbei ist, dass eine Fourier-Transformierte der Lichtrampe im wesentlichen einen Tiefpass darstellt.

In einer weiteren Ausgestaltung der Erfindung wird die Lichtstärke durch Variation einer Blende vor dem Bildsensor während einer Belichtungszeit variiert.

In der Regel besitzt eine Bildaufnahmeeinheit eine verstellbare Blende, die (vor einer Bildaufnahme) zur Einstellung von Tiefenschärfe und Belichtungszeit variiert wird. Üblicherweise wird die Blende während einer Bildaufnahme nicht verstellt. In dieser Ausgestaltung wird jedoch die definierte Charakteristik durch Verstellen der Blende bei der Bildaufnahme, also bei geöffnetem Verschluss der Bildaufnahmeeinheit, realisiert. Die Verwendung der Blende besitzt den Vorteil, dass die vorhandene "Hardware" genutzt wird. Die erfindungsgemäße Variation der Lichtstärke kann somit sehr kostengünstig erreicht werden.

In einer weiteren Ausgestaltung der Erfindung wird die Lichtstärke mit Hilfe eines variablen Absorptionsfilters vor dem Bildsensor während der Belichtungszeit variiert.

In dieser Ausgestaltung wird vor dem Bildsensor ein zusätzliches optisches Element angeordnet, das durch Absorption die Lichtstärke variieren kann, die auf den Bildsensor auftrifft. Die Verwendung eines Absorptionsfilters bietet die Möglichkeit, einzelne Lichtfrequenzen gezielt auszufiltern. Insbesondere die Ausgestaltung des Absorptionsfilters als elektrisch variables Absorptionsfilter ermöglicht es, die Charakteristik automatisiert zu realisieren. Ferner bietet das Absorptionsfilter den Vorteil, dass eine Farbtrennung bei Verwendung eines Musters mit Teilmustern unterschiedlicher Farbe am Absorptionsfilter direkt erfolgen kann.

In einer weiteren Ausgestaltung der Erfindung ist im Bereich der zu inspizierenden Oberfläche eine Lichtquelle angeordnet, wobei die Lichtstärke durch Variieren der Helligkeit der Lichtquelle während der Belichtungszeit variiert wird.

In dieser Ausgestaltung wird die Lichtstärke auf besonders einfache und kostengünstige Weise variiert, da Lichtquellen in der Regel bei der Deflektometrie bereits vorhanden sind. Diese werden hier in ihrer Helligkeit gesteuert. Die Lichtquelle kann auch aus einer Vielzahl einzelner Lichtquellen bestehen, die zum Variieren der Lichtstärke gemeinsam und gleichsinnig in ihrer Helligkeit gesteuert werden. Dies hat den Vorzug, dass eine entsprechende Steuerung sehr einfach und wirtschaftlich umgesetzt werden kann. In einem Ausführungsbeispiel ist es denkbar, stroboskopartige Lichtquellen einzusetzen, die die definierte Charakteristik realisieren. Vorteilhaft ist hier die Verwendung einer Leuchtstoffröhre mit 100 Hz denkbar, deren Flackern genutzt wird. Durch Synchronisieren der Belichtungszeit auf die stroboskopartige Lichtquelle kann die effektive Helligkeit sehr effizient variiert werden

In einer weiteren Ausgestaltung der Erfindung wird die Lichtstärke während der Belichtungszeit jedes einzelnen Bildes gleichartig variiert.

In dieser Ausgestaltung wird die Lichtstärke in jedem zur Auswertung herangezogenen Bild mit der gleichen Charakteristik variiert. Generell sind hier Charakteristiken bevorzugt, die mit einem Grundwert beginnen und wieder am Grundwert enden. Auf diese Weise kann sehr einfach eine periodische Folge der Charakteristik erzeugt werden, deren Periode jeweils einer Bildaufnahme entspricht. Diese Ausgestaltung führt zu einer einfachen Automatisierung des neuen Verfahrens. Gleichzeitig wird dadurch erreicht, dass das Aufnehmen der Bilder in einer sehr schnellen Abfolge geschieht. Ein weiterer Vorteil des gleichartigen Variierens ist die Vergleichbarkeit mehrerer Bilder innerhalb einer Schiebedistanz. Aber auch die Vergleichbarkeit von Bildern, welche in unterschiedlichen Schiebedistanzen entstanden sind, ist gegeben. Auf diese Weise können beispielsweise systematische Messfehler leicht erkannt und korrigiert werden.

In einer weiteren Ausgestaltung wird der erste Intensitätsverlauf in dem mindestens einen Bild mit einer Relativbewegung des Intensitätsverlaufs in Richtung des Intensitätsverlaufs aufgenommen.

In dieser Ausgestaltung wird die Belichtungszeit so gewählt, dass sich der Intensitätsverlauf während der Belichtungszeit um einen deutlichen Bruchteil einer Periode des Intensitätsverlaufs relativ zu der Bildaufnahmeeinheit bewegt. Dies führt zu einer Bewegungsunschärfe, da der Intensitätsverlauf aufgrund der Relativbewegung während der Belichtungszeit auf dem Bild verschoben wird. Die daraus resultierenden Veränderungen des Intensitätsverlaufs werden zusätzlich mit der Charakteristik gewichtet. Dies ermöglicht zum einen, Ungenauigkeiten zu glätten, etwa unstetige Stellen des Intensitätsverlaufs in Richtung der Bewegung. Zum anderen können zusammen mit der zeitlichen Variation der Lichtstärke Abweichungen des bereitgestellten realen Intensitätsverlaufs vom idealen Intensitätsverlauf sehr gezielt reduziert, verändert oder sogar gänzlich entfernt werden. Mit anderen Worten wird hier einerseits mit Hilfe der Charakteristik eine Filterung des Bildes über die Zeit vorgenommen. Andererseits wird mit Hilfe der Bewegung und einer daraus resultierenden Bewegungsunschärfe eine Filterung des Bildes über den Ort des Intensitätsverlaufs vorgenommen. Mathematisch gesehen erfolgt hier eine Faltung der Charakteristik mit der Veränderung des Intensitätsverlaufs über die Belichtungszeit an jedem im Bild erfassten Ort.

Beispielsweise kann so aus einem treppenförmigen (nicht-idealen) Sinusverlauf ein sehr guter, kontinuierlicher Sinusverlauf erzeugt werden. Die resultierende Optimierung des Intensitätsverlaufs führt zu einer besonders hohen Genauigkeit beim Inspizieren der Oberfläche. Insbesondere kann mit dieser Ausgestaltung aus einem Rechtecksmuster, d.h. einem periodischen Intensitätsverlauf, der eine Rechtecksfunktion darstellt, praktisch exakt sinusförmiger Intensitätsverlauf erzeugt werden. Die Anwendung bei einem rechtecksförmigen Intensitätsverlauf ermöglicht sehr einfach herzustellende Muster. Sie können in einfacher Weise bei einem einzelnen Intensitätsverlauf zweifarbig und bei zwei sich überlagernden Intensitätsverläufen dreifarbig ausgeführt sein. Weiter ergeben sich klar abgegrenzte Kanten orthogonal zum Intensitätsverlauf (Streifenkanten), die mit drucktechnischen Verfahren sehr einfach und wirtschaftlich hergestellt werden können. Weiter ist es denkbar, aufwendige und komplexe Intensitätsverläufe in den Bildern durch Verwendung von zueinander unterschiedlich breiten Rechteckstreifen zu erzeugen. Diese können, ähnlich einer Pulspausenmodulation aufeinander folgend angeordnet werden, sodass das gewünschte komplexe Muster durch Anwendung der Charakteristik virtuell im Bild entsteht.

Besonders vorteilhaft ist es, die Variation der Lichtstärke in Abhängigkeit von der Bewegung des Gegenstandes relativ zu dem Muster zu steuern, indem ein Steuersignal für die Lichtstärke durch räumliches Abtasten des Musters oder eines damit verbundenen Hilfsmusters erzeugt wird. Ein bevorzugtes Beispiel zum Erzeugen des Steuersignals ist in einer parallelen, zeitgleich eingereichten Patentanmeldung der Anmelderin beschrieben.

In einer weiteren Ausgestaltung wird eine effektive Belichtungszeit beim Aufnehmen der Bilder durch Vergrößern der Schiebedistanz vergrößert.

In dieser Ausgestaltung wird die effektive Belichtungszeit beim Aufnehmen eines Bildes dadurch vergrößert, dass ein zu inspizierender Oberflächenpunkt mehrfach mit dem Muster aufgenommen wird, wobei die Periodizität des Intensitätsverlaufs ausgenutzt wird. Die Bilder werden über mehrere Perioden verteilt aufgenommen, sodass jede einzelne Periode mit einer vergleichsweise geringeren Anzahl an Bildern abgetastet wird. Durch anschließendes Sortieren oder Kombinieren der Bilder ist es dann möglich, das Abtastrate virtuell zu erhöhen. Zu diesem Zweck werden Bilder, die in Perioden aufgenommen worden sind, die der ersten Periode nachfolgen, als Bilder betrachtet, die ebenfalls in der ersten Periode aufgenommen worden sind. Somit können die Bilder über alle Perioden auf Bilder über eine Periode zusammengefasst werden. Die Bilder werden hierzu so sortiert bzw. kombiniert, dass Sie nacheinander eine Periode des Intensitätsverlaufs in fortschreitender Phasenlage abdecken. Anders gesagt, werden die Bilder so sortiert, dass sich Ihre Belichtungszeiten virtuell überlappen, sodass trotz der hohen effektiven Belichtungszeit eine scheinbar dichtere Folge der Bilder herbeigeführt werden kann. Die größere effektive Belichtungszeit macht es möglich, dass die Charakteristik innerhalb eines größeren Wertebereichs variiert werden kann. Für eine Vergleichbarkeit der Bilder ist eine konstante effektive Belichtungszeit von Vorteil.

In einer weiteren Ausgestaltung ist die Schiebedistanz ein ganzzahliges Vielfaches der Periode des ersten Intensitätsverlaufs.

In dieser Ausgestaltung ist die Schiebedistanz das zwei-, drei- oder n-fache der Periode des Intensitätsverlaufs, wobei n eine ganze Zahl ist. Diese Ausgestaltung ermöglicht eine sehr einfache Überlagerung von mehreren Bildern zur Vergrößerung der effektiven Belichtungszeit. Bei gleichzeitiger Verwendung mehrerer überlagerter Intensitätsverläufe ist es bevorzugt, dass die Schiebedistanz ein ganzzahliges Vielfaches aller vorhandenen Perioden ist. Dadurch ergeben sich die genannten Vorteile für alle Intensitätsverläufe.

In einer weiteren Ausgestaltung ist das Muster ein passives Muster.

Ein passives Muster im Sinne dieser Ausgestaltung ist ein festes (unveränderliches) und typischerweise nichtselbstleuchtendes Muster. Ein passives Muster kann beispielsweise auf einen Träger gedruckt, gemalt, geätzt oder geklebt sein. Passive Muster lassen sich sehr einfach und kostengünstig bereitstellen. Allerdings ist es schwierig, wenn nicht gar unmöglich, einen exakt sinusförmigen Verlauf mit passiven Mustern in gleichbleibender Qualität und Reproduzierbarkeit bereitzustellen. Die Kombination der neuen Filterung mir passiven Mustern ermöglicht eine sehr hohe Musterqualität in Verbindung mit einer sehr kostengünstigen Herstellung.

Prinzipiell kann ein örtlich feststehendes oder ein räumlich bewegtes Muster eingesetzt werden. Bei Einsatz eines feststehenden Musters wird die zu inspizierende Oberfläche vorteilhafterweise relativ zu dem feststehenden Muster bewegt. Dadurch wird das Verschieben des ersten Intensitätsverlaufs relativ zu der Oberfläche um die definierte Schiebedistanz erreicht. Ein bewegtes Muster kann demgegenüber bei einer feststehenden Oberfläche verwendet werden. Denkbar ist auch eine Kombination aus bewegtem Muster und bewegter Oberfläche, so dass sich eine Relativbewegung zwischen Oberfläche und Muster durch Überlagerung der Bewegungen des Musters und der Oberfläche ergibt. Entscheidend für die deflektometrische Inspektion der Oberfläche ist letztlich nur die Relativbewegung zwischen Oberfläche und Muster.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1     eine vereinfachte Darstellung eines Ausführungsbeispiels der neuen Vor- richtung in einer Seitenansicht,

Fig. 2     die Vorrichtung aus Fig. 1 in einer Draufsicht von oben,

Fig. 3     die Vorrichtung aus Fig. 1 beim optischen Inspizieren einer Oberfläche,

Fig. 4     eine vereinfachte Darstellung eines weiteren Ausführungsbeispiels der neuen Vorrichtung,

Fig. 5        ein Diagramm mit einem rechtecksförmigen Intensitätsverlauf,

Fig. 6        ein Diagramm mit mehreren aufeinanderfolgenden Belichtungszeiten,

Fig. 7        ein Diagramm mit einem virtuellen trapezförmigen Intensitätsverlauf,

Fig. 8        ein Diagramm mit dem rechteckförmigen Intensitätsverlauf der Fig. 5,

Fig. 9        ein Diagramm mit Belichtungszeiten und einer periodischen Charakteristik,

Fig. 10       ein Diagramm mit einem virtuellen sinusförmigen Intensitätsverlauf,

Fig. 11       ein Diagramm mit einer trapezförmigen Charakteristik,

Fig. 12       ein Diagramm mit zwei fouriertransformierten Intensitätsverläufen und einer Filtercharakteristik im Frequenzbereich,

Fig. 13       ein Diagramm mit den zwei fouriertransformierten Intensitätsverläufen der Fig. 14 und einem weiteren Ausführungsbeispiel einer Filtercharakteristik im Frequenzbereich,

Fig. 14       ein Diagramm mit den zwei fouriertransformierten Intensitätsverläufen der Fig. 14 und einem weiteren Ausführungsbeispiel der Filtercharakteristik im Frequenzbereich,

Fig. 15       ein Diagramm mit zwei sinusförmigen Intensitätsverläufen, die aus zwei rechtecksförmigen Intensitätsverläufen durch Anwendung der Charakteris- tik erzeugt wurden und

Fig. 16       ein Flussdiagramm eines erfindungsgemäßen Verfahrens.

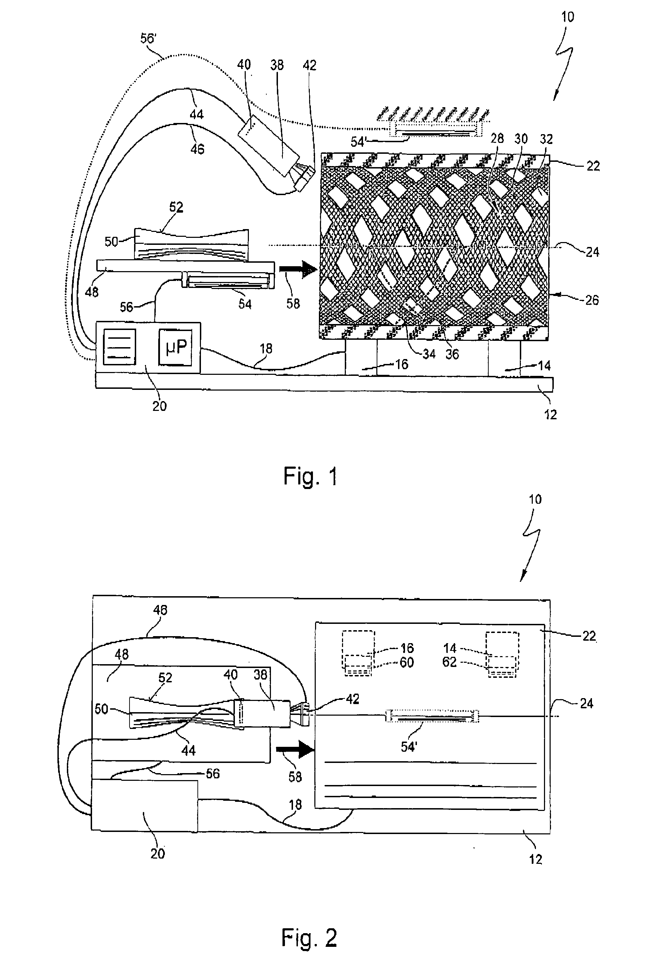

In den Fig. 1, 2, 3 und 4 sind Ausführungsbeispiele der neuen Vorrichtung in der Gesamtheit mit der Bezugsziffer 10 bezeichnet.

Fig. 1 zeigt die Vorrichtung 10 in einer Seitenansicht. Sie besitzt eine Grundplatte 12, auf der Halteteile 14 und 16 angeordnet sind. Das Halteteil 16 beinhaltet einen Antrieb und ist über eine Leitung 18 mit einer Steuerung- und Auswerteeinheit 20 verbunden. Fig. 1 ist eine teilweise geschnittene Seitenansicht, so dass lediglich eines der jeweils zwei Halteteile 14 und 16 dargestellt ist. Die Halteteile 14 und 16 stützen ein Rohrelement 22, das eine Längsachse 24 aufweist. Die Längsachse 24 ist parallel zur Grundplatte 12 ausgerichtet. Somit stützen die Halteteile 14 und 16 das Rohrelement 22 an seinem Außenmantel ab. Dies ist hier so realisiert, dass sich das Rohrelement 22 um seine Längsachse 24 drehen kann. Auf dem Innenmantel des Rohrelements 22 ist in diesem Fall eine Folie 26 angeordnet. Die Folie 26 dient als Träger für ein Muster 28. Das Muster 28 weist dunklere Bereiche 30 und hellere Bereiche 32 auf. Die abwechselnden Bereiche 30, 32 bilden zwei quer zueinander angeordnete, periodische Intensitätsverläufe 34, 36 mit jeweils einer definierten Periode. In einem Ausführungsbeispiel bilden die helleren und dunkleren Bereiche 30, 32 das Muster 28 mit rechteckigen Intensitätsverläufen 34, 36. Die Bereiche 30, 32 grenzen hier jeweils stufenartig aneinander an. In anderen Ausführungsbeispielen können die Intensitätsverläufe annähernd sinusförmig, sägezahnförmig oder mit anderen weitgehend kontinuierlichen Übergängen ausgebildet sein. Insbesondere ist auch ein trapezförmiger Intensitätsverlauf denkbar. Das Muster 28 ergibt sich hier aus zwei orthogonal zueinander gekreuzten Streifengruppen. Die Wahl des Winkels unter denen sich die Streifengruppen kreuzen kann frei gewählt werden. Es besteht auch die Möglichkeit mehrere Streifengruppen zu verwenden, die parallel zueinander verlaufen und sich somit nicht kreuzen. Jede Streifengruppe besitzt parallel zueinander angeordnete Streifen, die innerhalb der Streifengruppe jeweils dieselbe Streifenbreite aufweisen und gleiche Abstände zueinander besitzen. Die Streifengruppen können voneinander verschiedene Streifenbreiten besitzen. Quer zu den Streifengruppen ergeben sich der erste und der zweite Intensltätsverlauf 34 und 36, wobei die zwei Intensitätsverläufe 34, 36 hier aufgrund der unterschiedlichen Streifenbreiten unterschiedliche Perioden besitzen. Zum optischen Inspizieren dient eine Bildaufnahmeeinheit in Form einer Kamera 38 mit einem Bildsensor 40. Die Kamera 38 ist über eine Leitung 44 mit der Steuer- und Auswerteeinheit 20 verbunden. Die Steuer- und Auswerteeinheit 20 ist dazu ausgebildet, die Bilder der Kamera 38 deflektometrisch auszuwerten, um Oberflächendefekte an einem Gegenstand zu detektieren.

Die Vorrichtung 10 besitzt ferner eine Aufnahme 48, auf der ein Gegenstand 50 angeordnet ist. Der Gegenstand 50 besitzt die zu inspizierende Oberfläche 52. Unterhalb der Aufnahme 48 ist eine Lichtquelle 54 angeordnet. Zudem ist oberhalb des Rohrelements 22 eine alternative oder zusätzliche Lichtquelle 54' dargestellt. Diese führt in Verbindung mit einem lichtdurchlässigen Material des Rohrelements 22 zu einer Beleuchtung innerhalb des Rohrelements 22. Die Aufnahme 48 kann in Richtung eines Pfeils 58 bewegt werden, so dass der Gegenstand 52 in das Rohrelement 22 transportiert wird.

Vor der Kamera 38 und damit im Abbildungspfad vor dem Bildsensor 40 ist ein Absorptionsfilter 42 dargestellt. Der Absorptionsfilter 42 ist in der Lage, hindurch tretendes Licht zu absorbieren. Es ist über eine Leitung 46 mit der Steuer- und Auswerteeinheit 20 verbunden, die die zu absorbierende Lichtmenge einstellt. Die Das Absorptionsfilter dient in diesem Ausführungsbeispiel dazu, die Lichtstärke des ersten Intensitätsverlaufs, die den Bildsensor erreicht, mit einer Charakteristik zu variieren. Alternativ oder zusätzlich zu dem Absorptionsfilter 42 kann als weitere Stelleinrichtung zum Variieren der Lichtstärke eine variable Blende verwendet werden.

Die Lichtquelle 54 ist über eine Leitung 56 mit der Steuer- und Auswerteeinheit 20 verbunden. Auch die alternative oder zusätzliche Lichtquelle 54' ist über eine Leitung 56', die hier gestrichelt dargestellt ist, mit der Steuer- und Auswerteeinheit 20 verbunden. Die Steuer- und Auswerteeinheit 20 ist in diesem Ausführungsbeispiel ferner dazu ausgebildet, die Helligkeit der Lichtquellen 54, 54' zu variieren, um auch auf diese Weise die auf den Bildsensor auftreffende Lichtstärke während der Belichtungszeit zu variieren.

Fig. 2 zeigt die Vorrichtung 10 aus Fig. 1 in einer Draufsicht von oben. Der Einfachheit halber ist die alternative Leitung 56' hier nicht dargestellt. Das Halteteil 16 weist eine Antriebswalze 60 auf, die an dem Außenmantel des Rohrelements 22 anliegt und dieses in Rotation versetzt. Das Halteelement 14 weist eine Lagerwalze 62 auf, an der sich das Rohrelement 22 mit seinem Außenmantel abstützt. Die Antriebswalze 60 und die Lagerwalze 62 sind drehbar in dem Halteteil 16 und 14 gelagert.

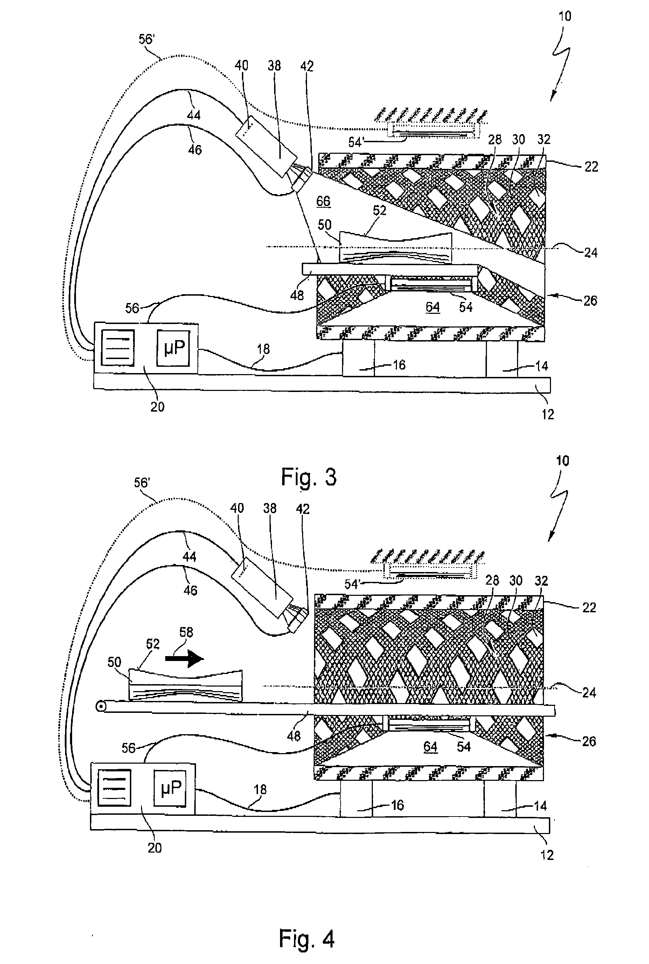

Fig. 3 zeigt die Vorrichtung 10 aus Fig. 1 und 2 in einer Seitenansicht beim optischen Inspizieren der Oberfläche 52. Zu diesem Zweck wurde die Aufnahme 48 mit dem Gegenstand 50 in das Innere des Rohrelements 22 bewegt. Beim Inspizieren der Oberfläche 52 rotiert das Rohrelement 22 um seine Längsachse 24 und bewegt dadurch die Folie 26. Durch das Rotieren werden der erste Intensitätsverlauf 34 und der zweite Intensitätsverlauf 36 relativ zu der Oberfläche 52 verschoben.

Die Steuer- und Auswerteeinheit 20 steuert den Antrieb des Halteteils 16 derart, dass das Rohrelement 22 um die Längsachse 24 rotiert. Um eine Inspektion der Oberfläche 52 mit ausreichender Beleuchtung zu ermöglichen, sind die Lichtquellen 54 und/oder 54' eingeschaltet, so dass sie einen Lichtkegel 64 erzeugen, der innerhalb des Rohrelements 22 durch Reflektion an den helleren Bereichen 32 verteilt wird. Es ist auch eine ringförmige Anordnung von Lichtquellen 54' um das Rohrelement 22 denkbar.

Zum Inspizieren der Oberfläche 52 werden nacheinander mehrere Bilder mit der Bildaufnahmeeinheit 38 aufgenommen, wobei sich die Intensitätsverläufe 34 und 36 jeweils an unterschiedlichen Positionen relativ zu der Oberfläche 52 befinden. Das Inspizieren der Oberfläche 52 erfolgt innerhalb eines Aufnahmebereichs 66, der die zu inspizierende Oberfläche 52 beinhaltet. Eine Oberfläche, die innerhalb des Aufnahmebereichs 66 nicht vollständig erfasst werden kann, kann in mehreren Arbeitsschritten stückweise inspiziert werden. Die mit der Kamera 38 aufgenommenen Bilder werden an die Steuer- und Auswerteeinrichtung 20 für eine Nachbearbeitung, Weiterverarbeitung und Auswertung übertragen.

Das Variieren der Lichtstärke, die vom Bildsensor 40 erfasst wird, kann auf verschiedene Weise erfolgen. Eine Möglichkeit ist es, den Absorptionsfilter 42 in seinen Eigenschaften derart zu verändern, dass die gewünschte Charakteristik erreicht wird. Alternativ oder zusätzlich kann dies mit der Blende erfolgen. Eine weitere Möglichkeit ist es, die Lichtquellen 54 und/oder 54' mit der Steuer- und Auswerteeinheit 20 in ihrer Helligkeit zu verändern. Bei einer Vielzahl an Lichtquellen 54, 54' ist es von Vorteil, wenn alle Lichtquellen gemeinsam und gleichsinnig in Ihrer Helligkeit variiert werden.

Von Vorteil ist ferner, wenn die Momentanposition des Musters 28 von der Steuer- und Auswerteeinheit 20 regelmäßig erfasst wird. Anhand der Momentanposition besteht die Möglichkeit, die Charakteristik synchron zur Bewegung des Musters 28 zu erzeugen. Ferner kann die Bildaufnahme, insbesondere der Beginn und das Ende der Belichtungszeit, in Abhängigkeit von der Momentanposition des Musters 28 gesteuert werden.

Fig. 4 zeigt ein weiteres Ausführungsbeispiel der neuen Vorrichtung. Das Ausführungsbeispiel in Fig. 4 unterscheidet sich von dem Ausführungsbeispiel in Fig. 1 durch die Verwendung eines Transportbandes als Aufnahme 48. Die Lichtquelle 54 ist in diesem Fall ortsfest zu der Grundplatte 12 an dem Transportband befestigt. Dies führt dazu, dass sich die Lichtquelle 54 stets in gleicher räumlicher Position innerhalb des rotierenden Rohrelements 22 befindet und damit für eine gleichbleibende Beleuchtung sorgt, abgesehen von der Variation durch die Steuer- und Auswerteeinheit 20. Die Verwendung des Transportbandes als Aufnahme 48 besitzt den Vorteil, dass eine Vielzahl von Gegenständen 50 schnell inspiziert werden kann. Zudem ermöglicht dieses Ausführungsbeispiel eine sehr einfache Einbindung der Vorrichtung 10 in bestehende Produktionsabläufe.

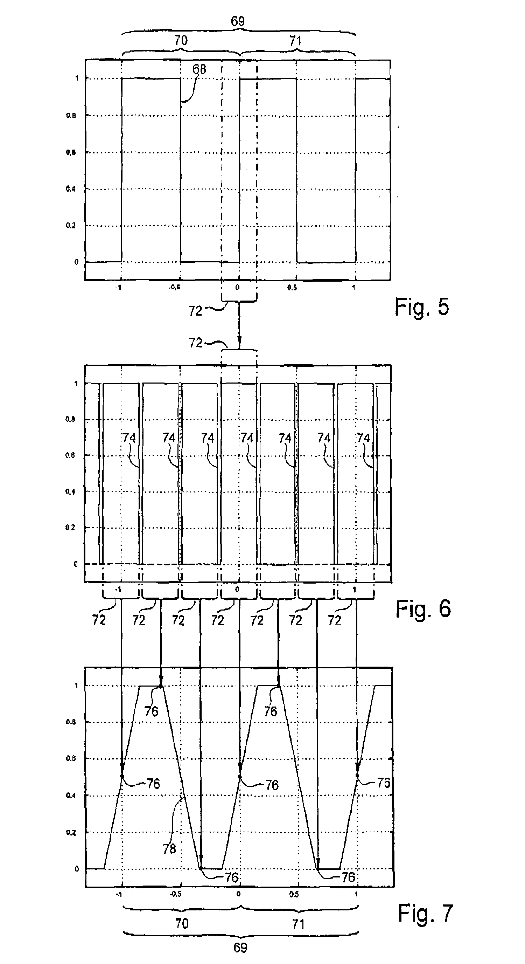

Fig. 5 zeigt ein Diagramm mit einer Abszisse, auf der die Zeit aufgetragen ist, und einer Ordinate, auf der eine auf der Oberfläche 52 vorhandene Intensität aufgetragen ist. Innerhalb des Diagramms ist ein erster rechteckförmiger Intensitätsverlauf 68 dargestellt. Der Intensitätsverlauf 68 weist eine Periodenlänge mit dem normierten Wert 1 auf. Der Intensitätsverlauf wird entlang der Abszisse um eine Schiebedistanz 69 verschoben. Die Schiebedistanz 69 beinhaltet eine erste Periode 70 und eine zweite Periode 71 des ersten Intensitätsverlaufs 68. Der Intensitätsverlauf 68 wird mit konstanter Geschwindigkeit verschoben und wird hier exemplarisch während einer Zeitspanne 72 an einem bestimmten Punkt der Oberfläche 52 mit einer Auflösung von einem Pixel mittels der Kamera 38 aufgenommen. Die Darstellung zeigt den Zeitpunkt während des Verschiebens, der zeitlich mittig in der Zeitspanne 72 liegt.

Fig. 6 zeigt ein Diagramm mit der Abszisse aus Fig. 5 und einer Ordinate, die den Zustand der Kamera 38 beschreibt. Besitzt der Zustand den Wert 0, so ist der Verschluss der Kamera 38 geschlossen. Der Bildsensor wird nicht belichtet. Ist der Wert an der Ordinate gleich 1, so ist der Verschluss der Kamera 38 geöffnet und ein Bild wird aufgenommen. Innerhalb des Diagramms sind Belichtungszeiten 74 dargestellt. Die Belichtungszeit 74 zum Referenzzeitpunkt 0 entspricht der Zeitspanne 72, so dass der Verschluss der Kamera zu Beginn der Zeitspanne 72 geöffnet und zum Ende der Zeitspanne 72 geschlossen wird.

Fig. 7 zeigt ein Diagramm mit der Abszisse aus Fig. 5, wobei die Ordinate in Fig. 7 die Intensität innerhalb der aufgenommenen Bilder beschreibt. Innerhalb des Diagramms sind mehrere Stützpunkte 76 dargestellt. Der Wert am Stützpunkt 76 zum Zeitpunkt 0 entsteht dadurch, dass die Kamera 38 aufgrund ihrer Funktion während der Belichtungszeit 74, und damit während der Zeitspanne 72, über den entsprechenden Bereich des Intensitätsverlaufs 68 integriert. In gleicher Weise ergeben sich die anderen Stützpunkte 76 aus den jeweiligen Belichtungszeiten 74 in Verbindung mit den entsprechenden Bereichen des Intensitätsverlaufs 68. Die Stützpunkte 76 definieren eine Kurve 78. Die Kurve 78 verläuft hier trapezförmig und sie ist periodisch, was auf die Integration durch die Kamera 38 zurückzuführen ist. Die Kurve 78 ist hier für ein einzelnes Kamerapixel dargestellt. Eine Anordnung mit einer Vielzahl von Pixeln zum Aufnehmen der Bilder führt in einer Belichtungszeit 74 zu einem Bild, das als Inhalt einen periodischen trapezförmigen virtuellen Intensitätsverlauf 78 über den Ort zeigt. Durch Aufnehmen zeitlich aufeinanderfolgender Bilder, wie dies in Fig. 6 dargestellt ist, ergeben sich dann Bilder, die das Verschieben des trapezförmigen virtuellen Intensitätsverlaufs 78 zeigen.

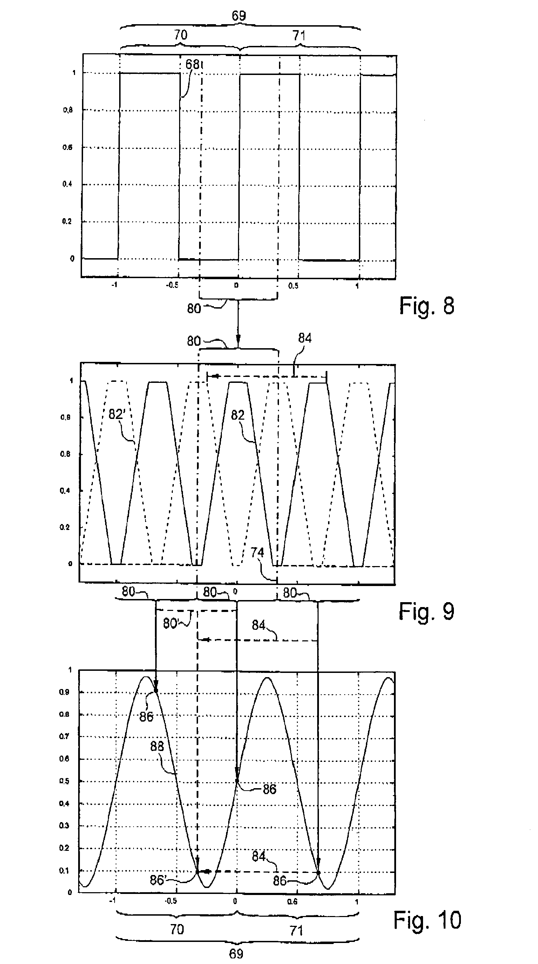

Fig. 8 zeigt das Diagramm aus Fig. 5 mit dem Intensitätsverlauf 68, der Schiebedistanz 69 sowie der ersten und zweiten Periode 70 und 71. Innerhalb des Diagramms ist ein Zeitraum 80 gekennzeichnet, der im vergleich mit dem Zeitraum 72 wesentlich größer gewählt ist.

Fig. 9 zeigt ein Diagramm mit der Abszisse aus Fig. 8 und einer Ordinate über die Lichtstärke. Innerhalb des Diagramms ist eine periodische, trapezförmige Lichtrampe 82 dargestellt. Die der Zeitspanne 80 entspricht einem einzelnen Trapez der Lichtrampe 82. Die Belichtungszeit 74 ist gleich dem Zeitraum 80 gewählt. Während der langen Belichtungszeit 74 nimmt die Kamera somit ein vollständiges Trapez der Lichtrampe 82 und zudem einen wesentlich größeren Bereich des Intensitätsverlaufs 68 auf, als dies in Fig. 5 der Fall ist. Die Wahl der Belichtungszeit 74 kann auch unabhängig von der Periodizität der Charakteristik 82 erfolgen, wodurch die effektive Charakteristik zusätzlich variiert werden kann. Außerdem ist in Fig. 9 eine verschobene Lichtrampe 82' dargestellt, die aus der Lichtrampe 82 erzeugt werden kann, indem diese entlang eines Pfeils 84 verschoben wird.

Fig. 10 zeigt ein Diagramm mit der Abszisse und der Ordinate aus Fig. 7. Innerhalb des Diagramms sind mehrere Stützpunkte 86 dargestellt, die über die beiden Perioden 70 und 71 verteilt sind. Der Wert am Stützpunkt 86 zum Zeitpunkt 0 resultiert aus der Integration über die Belichtungszeit 74 in Verbindung mit der Lichtrampe 82. Der Bereich des Intensitätsverlaufs 68 innerhalb der Zeitspanne 80 wird integriert, wobei die einzelnen Werte des Intensitätsverlaufs 68 mit der Lichtrampe gewichtet werden. In entsprechender Weise erfolgt dies für alle Stützpunkte 86. Die Vielzahl der Stützpunkte 86 führt zu einer sinusartigen Kurve 88. Mathematisch gesehen erfolgt beim Aufnehmen der Bilder über die Schiebedistanz eine Faltung der Charakteristik innerhalb der Belichtungszeit, hier also dem einen Trapez, mit dem Intensitätsverlauf. Aus dieser Faltung entsteht die Kurve 88 als kontinuierliche Kurve. Die Kurve 88 würde bei Einsatz des Verfahrens dann entstehen, wenn die Lichtrampe 82 in infinitessimal kleinen Schritten über den Intensitätsverlauf 68 verschoben werden würde. Aufgrund der real benötigten Belichtungszeit 74 können nur die auf der Kurve 88 liegenden diskreten Stützpunkte 86 erfasst werden. Aufgrund der real größeren Belichtungszeit 74 enthält die Kurve 88 weniger Stützpunkte 86 als die Kurve 78. Es ist auch möglich, dass noch weniger Stützpunkte innerhalb einer solchen Kurve erfasst werden können. Dies kann dazu führen, dass die Rekonstruktion der Kurve 80 erschwert ist oder ihre Phasenlage zunächst nicht bestimmt werden kann. Die Periodizität des Intensitätsverlaufs 68 ermöglicht es jedoch, dass Stützpunkte 86, die erst in der zweiten Periode 71 bestimmt wurden, als Stützpunkte 86' der ersten Periode 70 verwendet werden können.

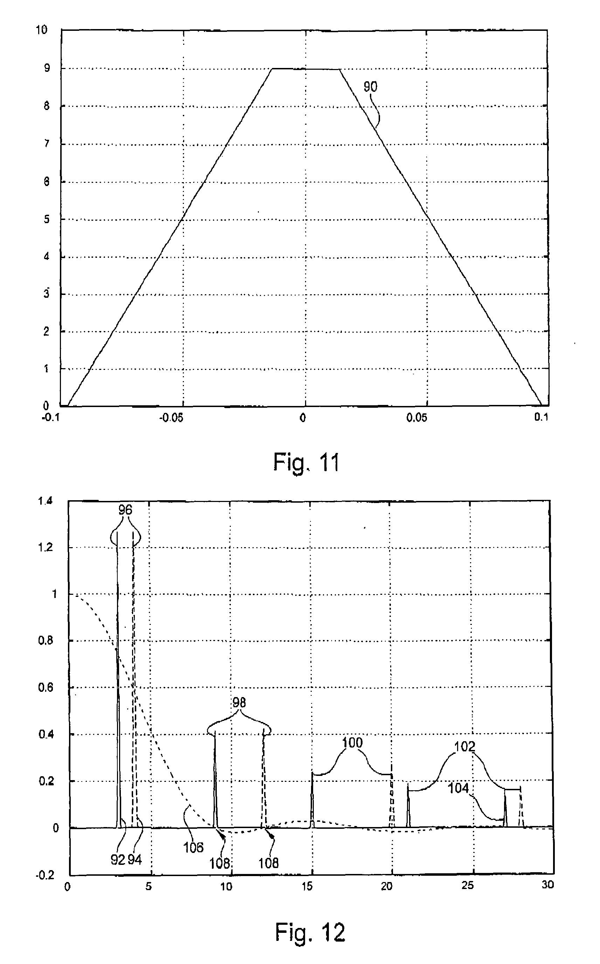

Mit den Fig. 11 bis 15 wird die Wirkung eines erfindungsgemäßen Verfahrens anhand eines konkreten Beispiels näher erläutert. Zu diesem Zweck wird ein Intervall, die Schiebedistanz, betrachtet, über das ein Muster konstant bewegt wird und über das mehrere Bilder aufgenommen werden. Das Muster beinhaltet ein erstes und ein zweites Streifenmuster, die orthogonal zueinander überlagert sind. Das erste Streifenmuster weist einen ersten Intensitätsverlauf mit einer ersten Streifenperiode und das zweite Streifenmuster einen zweiten Intensitätsverlauf mit einer zweiten Streifenperiode auf. Innerhalb des Intervalls werden fünf Bilder aufgenommen. Ferner sei angenommen, dass das Intervalls genau drei erste Streifenperioden des ersten Streifenmusters und vier Streifenperioden des zweiten Streifenmusters beinhaltet.

Die Anzahl der Bilder verletzt hier das allgemeine Abtasttheorem in Bezug auf die ersten Streifenperioden und zweiten Streifenperioden. Dennoch können die beiden Teilmuster unterschieden werden, da ihre Alias-Frequenzen, die durch die Unterabtastung entstehen, unterschiedlich sind. Die Verwendung von mehreren, in diesem Fall drei und vier Streifenperioden ermöglicht, dass die Belichtungszeit einzelner Bilder, wie in den Fig. 5 bis 10 beschrieben, größer gewählt werden. Daraus ergibt sich, dass eine Charakteristik, hier eine Filterfunktion, verbreitert werden kann. Mit anderen Worten, die relative Filterbreite der Filterung kann durch Verlängerung der Belichtungszeit vergrößert werden. Zudem ist ein relativer Frequenzunterschied zwischen dem ersten und zweiten Intensitätsverlauf hier klein, was sich vorteilhaft auf eine Auslegung der Filterung auswirkt. Das Bewegen des Streifens erfolgt in dem vorliegenden Beispiel gegenüber der Kamera mit einem Winkel β = arctan (3/4) = 36,87°. Dieser Winkel bietet die optimale Möglichkeit, die beiden Intensitätsverläufe gleichzeitig mit einer Bildaufnahmeeinheit aufnehmen zu können und anschließend korrekt unterscheiden zu können, wie dies in der eingangs genannten WO 2009/007130 A1 beschrieben ist. Der Offenbarungsgehalt dieser Anmeldung ist hier durch Bezugnahme aufgenommen. Die maximale Breite der Filterfunktion kann bei der gewählten Anzahl der Bilder maximal 1/(Anzahl der Bilder) = 0,2 breit sein. Bei Auslegung der Filterfunktion ist zu berücksichtigen, dass sie nur positive Werte oder Nullwerte enthalten darf, da die vorhandene Lichtstärke nur reduziert werden kann. Es wird ein rechtecksförmiger Intensitätsverlauf sowohl für den ersten als auch für den zweiten Intensitätsverlauf verwendet, so dass diese Intensitätsverläufe zusätzlich zu einer Grundwelle nur ungerade Oberwellen enthalten. Dabei dominiert die dritte Oberwellen, also die Oberwelle mit der dreifachen Frequenz der Grundwelle. Daher werden zwei einfache Filterfunktionen kombiniert, wobei die erste Filterfunktion die dritte Oberwelle des ersten Intensitätsverlaufs und die zweite Filterfunktion die dritte Oberwelle des zweiten Intensitätsverlaufs unterdrücken. Dies führt zu einer Tiefpasscharakteristik zweiter Ordnung und damit gleichzeitig zu einer guten Dämpfung von höheren Oberwellen. Die aufgrund des genannten Beispiels benötigten Filterbreiten sind:

$$\text{BreiteA} = \frac{1}{3 * \text{Anzahl der ersten Streifenperioden}}$$

$$\text{BreiteB} = \frac{1}{3 * \text{Anzahl der zweiten Streifenperioden}}.$$

Die resultierende Filterfunktion ist die Faltung beider einfacher Filterfunktionen und hat einen trapezförmigen Verlauf mit einer Breite:

$$\text{BreiteAB} = \text{BreiteA} + \text{BreiteB} = 0,19444.$$

Diese Breite ist somit wie oben beschrieben innerhalb der erforderlichen Grenzen.

Fig. 11 zeigt ein Diagramm mit einer Abszisse über die Zeit und einer Ordinate über den Wert der Filterfunktion. Innerhalb des Diagramms ist eine Kurve 90 dargestellt, die die oben beschriebene Filterfunktion zeigt.

Fig. 12 zeigt ein Diagramm mit einer Abszisse über die Frequenzen und einer Ordinate über die Amplitude. Innerhalb des Diagramms ist der erste Intensitätsverlauf als erster fouriertransformierter Intensitätsverlauf 92 und der zweite Intensitätsverlauf als zweiter fouriertransformierter. Intensitätsverlauf 94 dargestellt. Die fouriertransformierten Intensitätsverläufe 92, 94 weisen jeweils eine Grundwelle 96, dritte Oberwelle 98, fünfte Oberwelle 100 und siebte Oberwelle 102 auf. Ferner ist die neunte Oberwelle 104 des ersten fouriertransformierten Intensitätsverlaufs 92 dargestellt. Weiter ist innerhalb des Diagramms eine Filtercharakteristik 106 gezeigt, welche durch die Filterfunktion in Form der Kurve 90 in Fig. 11 erzeugt ist. Die Filtercharakteristik 96 weist zwei Nullstellen 108 an den dritten Oberwellen 98 der Intensitätsverläufe 92 und 94 auf. Dadurch ergibt sich, dass die dritten Oberwellen 98 vollständig aus den Intensitätsverläufen 92 und 94 ausgefiltert werden. Die höheren Oberwellen 100, 102 und 104 werden sehr stark gedämpft und lediglich in geringem Maße von der Filtercharakteristik 106 durchgelassen.

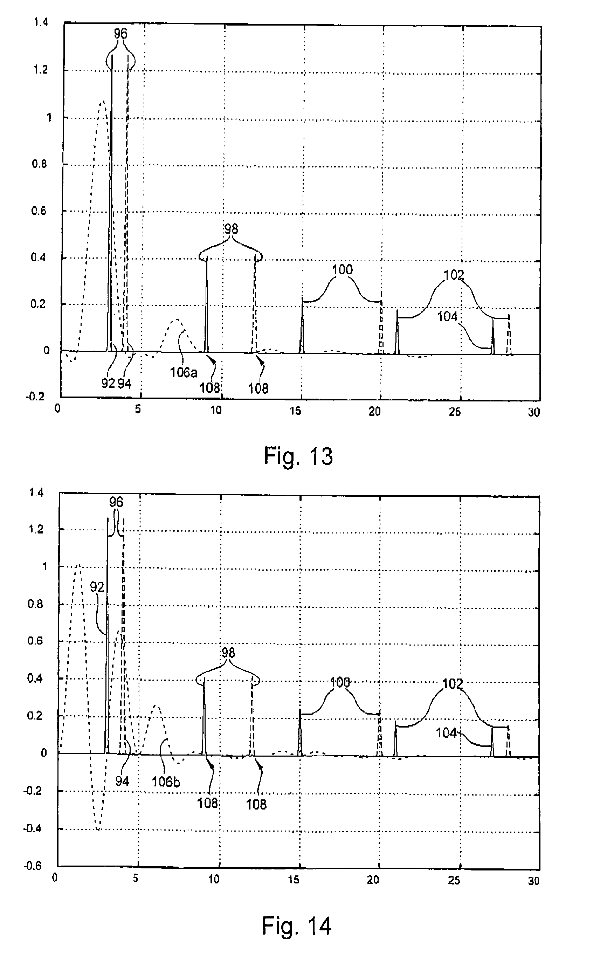

Fig. 13 und 14 zeigen das Diagramm der Fig. 12, wobei die Filtercharakteristik 106 durch eine zusätzliche, nachträgliche digitale Filterung in die Filtercharakteristiken 106a und 106b verändert wurden.

Die Filtercharakteristik 106a in Fig. 13 weist eine zusätzliche Nullstelle 108 auf, die an der Stelle der Grundwelle 96 des zweiten Intensitätsverlaufs 94 liegt. Somit wird erreicht, dass nicht nur eine Tiefpassfilterung der Intensitätsverläufe 92, 94 vorliegt, sondern der zweite Intensitätsverlauf 94 im Wesentlichen vollständig ausgefiltert wird.

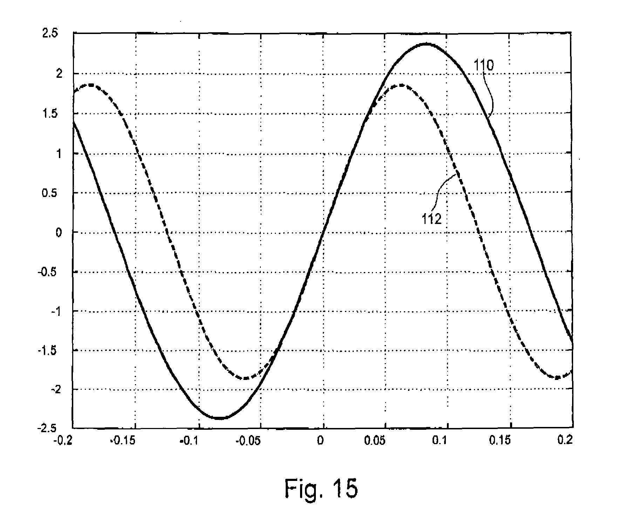

Die Filtercharakteristik 106b ist in Fig. 14 in entsprechender Weise wie die Filtercharakteristik 106a entstanden. Jedoch weist die Filtercharakteristik 106b eine weitere Nullstelle 108 gegenüber der Filtercharakteristik 106 auf. Diese Nullstelle 108 liegt an der Position der Grundwelle 96 des ersten Intensitätsverlaufs 92. Auf diese Weise wird, entsprechend zu dem Vorgehen in Fig. 15, der erste Intensitätsverlauf 92 im Wesentlichen aus den Bildern ausgefiltert.

Somit besteht durch das in den Fig. 13 und 14 dargestellte Vorgehen die Möglichkeit, zum einen eine Tiefpassfilterung an den Intensitätsverläufen 92, 94 vorzunehmen und anschließend einen der Intensitätsverläufe 92 oder 94 auszuwählen. Dies führt zu einer sehr hohen Messgenauigkeit und zu einer Vereinfachung des Verfahrens, da beim Aufnehmen mehrere Intensitätsverläufe gleichzeitig berücksichtigt werden, die getrennt ausgewertet werden können.

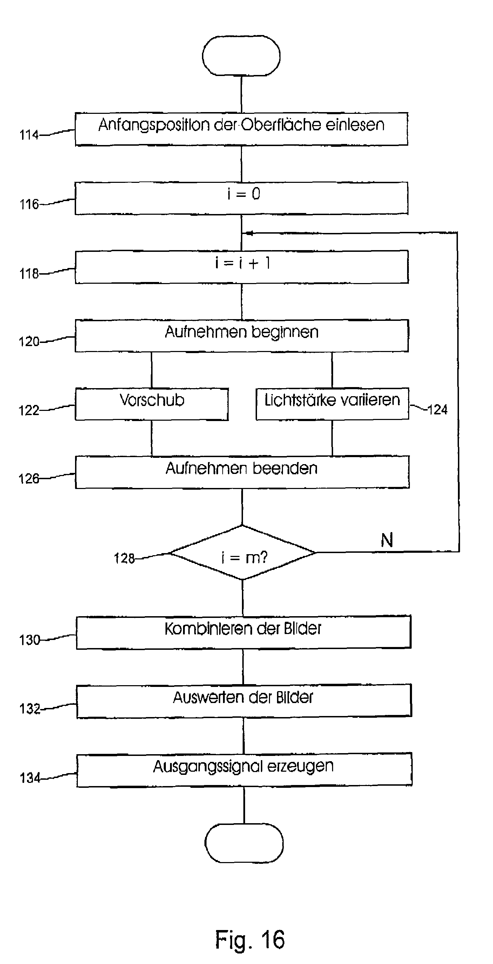

Fig. 15 zeigt ein Diagramm mit einer Abszisse über den Ort und einer Ordinate über die Lichtstärke. Innerhalb des Diagramms sind zwei Sinusnäherungen 100 und 102 dargestellt. Diese Sinusnäherungen 100, 102 stellen eine Annäherung an einen idealen Sinus dar, die sich ergeben, wenn das erfindungsgemäße Verfahren, wie in den Fig. 15 und 16 beschrieben, auf die im Beispiel genannten rechtecksförmigen Intensitätsverläufe 92 und 94 angewendet wird.

Fig. 16 zeigt ein Flussdiagramm eines bevorzugten Verfahrens der erfindungsgemäßen Art in vereinfachter Darstellung. In einem Schritt 114 wird zunächst die Anfangsposition der Oberfläche 52 entlang ihrer Bewegungsrichtung eingelesen. Dies kann in bekannter Weise mit Hilfe von Positionsgebern erfolgen, die die Position der Oberfläche 52 erfassen. Anschließend wird in einem Schritt 116 eine Zählvariable i auf Null gesetzt. Im darauffolgenden Schritt 118 wird die Zählvariable i um 1 inkrementiert. Anschließend wird im Schritt 120 ein Aufnehmen eines Bildes begonnen. Während des Aufnehmens erfolgen die Schritte 122 und 124 parallel zueinander. In Schritt 122 wird der betrachtete erste Intensitätsverlauf 34 relativ zu der Oberfläche 52 verschoben. Gleichzeitig wird im Schritt 124 die Lichtstärke variiert. Nach einer vorbestimmten Zeit oder durch entsprechendes Ansteuern der Kamera 38 mittels der Steuer- und Auswerteeinheit 20 wird im Schritt 126 das Aufnehmen beendet. Im Schritt 128 erfolgt eine Abfrage, ob bereits genügend Bilder aufgenommen wurden, indem die Zählvariable i mit einer vorgegebenen Anzahl m benötigter Bilder übereinstimmt. Ist dies nicht der Fall, werden die Schritte 118 bis 126 erneut durchlaufen. Wird im Schritt 128 festgestellt, dass die gewünschte Anzahl m der Bilder erreicht ist, erfolgt ein Schritt 130. Die daraus resultierenden kombinierten Bilder werden im darauffolgenden Schritt 132 von der Steuer- und Auswerteeinheit 20 ausgewählt, durch die verbleibenden Bilder werden die lokale Oberflächenneigung an den Oberflächenpunkten der Oberfläche 52 bestimmt. Beispielsweise bei m = 4 nach der 4-Bucket-Methode. Weiter werden in diesem Schritt 132 Oberflächendefekte in Abhängigkeit von den lokalen Oberflächenneigungen bestimmt, indem beispielsweise ein Schwellwertkriterium angewandt wird. Gemäß Schritt 134 wird anschließend ein Ausgangssignal erzeugt, das beispielsweise bei einem erkannten Oberflächendefekt dafür sorgt, dass der als defekt erkannte Oberflächenpunkt markiert oder in einer Weise gespeichert wird.

Die Schiebedistanz, innerhalb der die Vielzahl von Bildern aufgenommen wird, entspricht in einigen Ausführungsbeispielen genau einer Periode des Intensitätsverlaufs. Bevorzugt wird jeder zu inspizierende Oberflächenpunkt innerhalb der Schiebedistanz zumindest viermal aufgenommen, weil dies eine sehr einfache Bestimmung der lokalen Neigung des Oberflächenpunktes nach der so genannten 4-Bucket-Methode ermöglicht. Diese ist in der eingangs genannten WO 2009/007130 A1 erläutert, die hier durch Bezugnahme in vollem Umfang aufgenommen ist.

Weiter ist es vorteilhaft, die Bilder nach dem Aufnehmen nachzubearbeiten. Dies kann beispielsweise durch eine digitale Filterung bei Auswertung der Bilder erfolgen. Dabei hat eine hohe Anzahl von Bildern pro Schiebedistanz den Vorteil, dass eine hohe Anzahl an Oberwellen zusätzlich digital ausgefiltert werden können. Somit lässt sich durch das Nachbearbeiten die Genauigkeit des Intensitätsverlaufs und damit die Genauigkeit beim Inspizieren der Oberfläche noch weiter steigern. Darüber hinaus kann das Nachbearbeiten vorteilhaft beinhalten, mehrere einander überlagerte Intensitätsverläufe voneinander zu trennen, wie dies in WO 2009/007130 A1 erläutert ist.

Weiterhin ist es denkbar, die Momentanposition des Musters zu dem Gegenstand und dessen Bewegung durch eine dafür ausgebildete Messeinrichtung zu erfassen. Dies führt zusätzlich zu einer Verbesserung der Messgenauigkeit, da die Informationen über die Momentanposition oder die Momentangeschwindigkeit des Musters vorteilhaft zum Steuern oder Regeln der Lichtstärke eingesetzt werden können. Damit besteht insbesondere die Möglichkeit, Gleichlaufschwankungen bei der Relativbewegung zwischen Oberfläche und Muster zu kompensieren. Zudem kann anhand der Informationen über Momentanposition oder Momentangeschwindigkeit die Belichtungszeit angepasst werden. Dies erfolgt, indem anhand der Momentanposition oder der Momentangeschwindigkeit der Beginn und das Ende der Bildaufnahme (Öffnung des Kameraverschlusses) bestimmt werden.

**Patentansprüche**

1. Verfahren zum optischen Inspizieren einer zumindest teilweise reflektierenden Oberfläche (52) an einem Gegenstand (50), mit den Schritten:

   - Bereitstellen eines Musters (28) mit einer Vielzahl von helleren und dunkleren Bereichen (30, 32), die mindestens einen ersten räumlichen Intensitätsverlauf (34, 36, 68, 92, 94) mit einer ersten räumlichen Periode (70, 71) bilden,
   - Positionieren des Gegenstandes (50) mit der Oberfläche (52) relativ zu dem Muster (28) derart, dass der erste Intensitätsverlauf (34, 36, 68, 92, 94) auf die Oberfläche (52) fällt,
- Verschieben des ersten Intensitätsverlaufs (34, 36, 68, 92, 94) relativ zu der Oberfläche (52) um eine definierte Schiebedistanz (69), wobei die Oberfläche (52) entlang der Schiebedistanz (69) eine Vielzahl von unterschiedlichen Positionen relativ zu dem ersten Intensitätsverlauf (34, 36, 68, 92, 94) einnimmt,
- Aufnehmen einer Vielzahl von Bildern mit zumindest einem Bildsensor (40), der eine Lichtstärke erfasst, wobei die Bilder die Oberfläche (52) mit dem ersten Intensitätsverlauf (32, 34, 68, 92, 94) an den unterschiedlichen Positionen zeigen, und
- Bestimmen von Eigenschaften der Oberfläche (52) in Abhängigkeit von den Bildern,
**dadurch gekennzeichnet, dass** die Lichtstärke des ersten Intensitätsverlaufs (34, 36, 68, 92, 94) beim Aufnehmen von mindestens einem der Bilder mit einer definierten Charakteristik (82, 90) variiert wird.

2. Verfahren nach Anspruch 1, **dadurch gekennzeichnet, dass** die Lichtstärke mit einer weitgehend trapezförmigen Charakteristik (82, 90) variiert wird.

3. Verfahren nach Anspruch 1 oder 2, **dadurch gekennzeichnet, dass** die Lichtstärke durch Variation einer Blende vor dem Bildsensor (40) während einer Belichtungszeit (80) variiert wird.

4. Verfahren nach einem der Ansprüche 1 bis 3, **dadurch gekennzeichnet, dass** die Lichtstärke mit Hilfe eines variablen Absorbtionsfilters (42) vor dem Bildsensor (40) während der Belichtungszeit (80) variiert wird.

5. Verfahren nach einem der Ansprüche 1 bis 4, **dadurch gekennzeichnet, dass** im Bereich der zu inspizierenden Oberfläche (52) eine Lichtquelle (54, 54') angeordnet ist, wobei die Lichtstärke durch Variieren der Helligkeit der Lichtquelle (54, 54') während der Belichtungszeit (80) variiert wird.

6. Verfahren nach einem der Ansprüche 1 bis 5, **dadurch gekennzeichnet, dass** die Lichtstärke während der Belichtungszeit (76, 80) jedes einzelnen Bildes gleichartig variiert wird.

7. Verfahren nach einem der Ansprüche 1 bis 6, **dadurch gekennzeichnet, dass** der erste Intensitätsverlauf (34, 36, 68, 92, 94) in dem mindestens einen Bild mit einer Relativbewegung des Intensitätsverlaufs (34, 36, 68, 92, 94) in Richtung des Intensitätsverlaufs (34, 36, 68, 92, 94) aufgenommen wird.

8. Verfahren nach einem der Ansprüche 1 bis 7, **dadurch gekennzeichnet, dass** eine effektive Belichtungszeit (80) beim Aufnehmen der Bilder durch Vergrößern der Schiebedistanz (69) vergrößert wird.

9. Verfahren nach Anspruch 8, **dadurch gekennzeichnet, dass** die Schiebedistanz (69) ein ganzzahliges Vielfaches der Periode (70, 71) des ersten Intensitätsverlaufs (34, 36, 68, 92, 94) ist.

10. Vorrichtung (10) zum optischen Inspizieren einer zumindest teilweise reflektierenden Oberfläche (52) an einem Gegenstand (50), mit:

- einem Muster (28) mit einer Vielzahl von helleren und dunkleren Bereichen (30, 32), die einen ersten räumlichen Intensitätsverlauf (34, 36,68, 92, 94) mit einer ersten räumlichen Periode (70, 71) bilden,
- einer Aufnahme (48) zum Positionieren des Gegenstandes (50) mit der Oberfläche (52) relativ zu dem Muster (28) derart, dass der erste Intensitätsverlauf (34, 36, 68, 92, 94) auf die Oberfläche (52) fällt,
- einer Steuereinheit (20) zum Verschieben des ersten Intensitätsverlaufs (34, 36, 68, 92, 94) relativ zu der Oberfläche (52) um eine definierte Schiebedistanz (69), wobei die Oberfläche (52) entlang der Schiebedistanz (69) eine Vielzahl von unterschiedlichen Positionen relativ zu dem ersten Intensitätsverlauf (34, 36, 68, 92, 94) einnimmt,
- zumindest einer Bildaufnahmeeinheit (38) mit mindestens einem Bildsensor (40), der eine Lichtstärke erfasst, zum Aufnehmen einer Vielzahl von Bildern, wobei die Bilder die Oberfläche (52) mit dem ersten Intensitätsverlauf (34, 36, 68, 92, 94) an den unterschiedlichen Positionen zeigen, und
- einer Auswerteeinheit (20) zum Bestimmen von Eigenschaften der Oberfläche (52) in Abhängigkeit von den Bildern,
**gekennzeichnet durch** mindestens eine Stelleinrichtung (42, 20), die die Lichtstärke des ersten Intensitätsverlaufs (34, 36, 68, 92, 94) beim Aufnehmen von mindestens einem der Bilder mit einer definierten Charakteristik (82, 90) variiert.

11. Computerprogramm mit Programmcode, der auf einem Datenträger gespeichert ist und der dazu ausgebildet ist, ein Verfahren nach einem der Ansprüche 1 bis 9 mit allen Verfahrensschritten auszuführen, wenn der Programmcode auf einem Computer einer Vorrichtung (10) nach Anspruch 10 ausgeführt wird.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009007130 A1